# EUROPEAN PATENT APPLICATION

(11) **EP 3 706 213 A1**
(43) Date of publication of application: **09.09.2020**
(21) Application number: 18873820.7
(22) Date of filing: 17.10.2018
(51) Int. Cl.: H01M 4/48, H01M 4/36, H01M 4/38, H01M 4/40, H01M 4/58

(54) **NEGATIVE ELECTRODE ACTIVE SUBSTANCE FOR NONAQUEOUS ELECTROLYTE SECONDARY BATTERY AND NONAQUEOUS ELECTROLYTE SECONDARY BATTERY**

(30) Priority: 31.10.2017 JP 2017211020
(71) Applicant: Panasonic Intellectual Property Management Co., Ltd., Osaka-shi, Osaka 540-6207 (JP)
(72) Inventor: YAMAMOTO Norihisa, Osaka-shi, Osaka 540-6207 (JP); MINAMI Hiroshi, Osaka-shi, Osaka 540-6207 (JP)
(74) Representative: Vigand, Philippe
(86) International application number: PCT/JP2018/038570
(87) International publication number: WO 2019/087771

(57) **Abstract**

Provided are negative electrode active substance particles containing: a lithium silicate phase represented by Li_{2z}SiO_{(2+z)} {0 < z < 2}; silicon particles dispersed in the lithium silicate phase; and metal particles that include a metal, an alloy, or a metal compound as the primary component and that are dispersed in the lithium silicate phase. The aspect ratio of the metal particles is 2.7 or greater.

## Description

### TECHNICAL FIELD

The present disclosure relates to a negative electrode active material for a non-aqueous electrolyte secondary battery, and a non-aqueous electrolyte secondary battery.

### BACKGROUND ART

It is known that silicon materials such as silicon (Si) and silicon oxide represented by SiOₓ can intercalate more lithium ions per unit volume than carbon materials such as graphite.

For example, Patent Literatures 1 and 2 disclose a negative electrode active material for a non-aqueous electrolyte secondary battery that includes a lithium silicate phase and silicon particles dispersed in the lithium silicate phase.

For example, Patent Literature 3 discloses a negative electrode for a lithium ion secondary battery including SiO₂ and LiAlO₂.

### CITATION LIST

### PATENT LITERATURE

PATENT LITERATURE 1: WO 2016/121320
PATENT LITERATURE 2: WO 2016/136180
PATENT LITERATURE 3: Japanese Unexamined Patent Application Publication No. 2013-197012

### SUMMARY

When a non-aqueous electrolyte secondary battery in which silicon particles are used as a negative electrode active material is rapidly charged/discharged, the battery capacity of the secondary battery may be deteriorated.

Thus, an object of the present disclosure is to provide a negative electrode active material for non-aqueous electrolyte secondary batteries that can prevent a deterioration in the battery capacity even when the non-aqueous electrolyte secondary battery is rapidly charged/discharged in which silicon particles are used as a negative electrode active material; and a non-aqueous electrolyte secondary battery.

A negative electrode active material for a non-aqueous electrolyte secondary battery according to one aspect of the present disclosure comprises: a lithium silicate phase of Li_{2z}SiO_{(2+z)} (wherein 0 < z <2); silicon particles dispersed in the lithium silicate phase; and metallic particles dispersed in the lithium silicate phase and comprising a metal, an alloy, or a metal compound as a main component, wherein the metallic particles have an aspect ratio of 2.7 or more.

A non-aqueous electrolyte secondary battery according to one aspect of the present disclosure comprises: a negative electrode including the above-described negative electrode active material for a non-aqueous electrolyte secondary battery, a positive electrode, and a non-aqueous electrolyte.

According to one aspect of the present disclosure, even when a non-aqueous electrolyte secondary battery is rapidly charged/discharged in which silicon particles are used as a negative electrode active material, the deterioration in the battery capacity may be prevented.

### BRIEF DESCRIPTION OF DRAWING

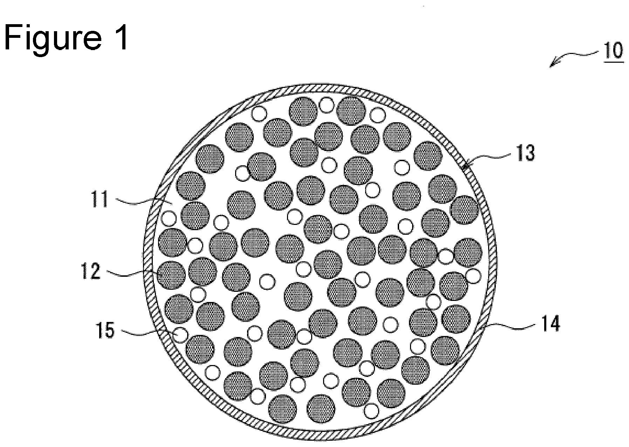

FIG. 1 is a sectional view schematically illustrating a particle of the negative electrode active material as an exemplary embodiment.

### DESCRIPTION OF EMBODIMENTS

When silicon particles are used as a negative electrode active material, the following reactions occur upon charge/discharge of the battery, for example.

| | |
|---|---|
| Charge: Si + 4Li⁺ + 4e⁻ -> Li₄Si | Discharge: Li₄Si -> Si + 4Li⁺ + 4e⁻ |

Generally, the volume change of the silicon particles due to the charge/discharge reaction is large. Particularly, when rapid charge/discharge is carried out, the breakage of the particles may occur to thereby deteriorate the battery capacity. As a result of earnest studies of the present inventors, it has been found that when silicon particles and metallic particles having a specific aspect ratio are dispersed in a silicate phase, the volume change of the silicon particles due to the rapid charge/discharge may be reduced to thereby prevent the breakage of the particles, thus conceiving the negative electrode active material for a non-aqueous electrolyte secondary battery of the aspect that will be described below.

The negative electrode active material for a non-aqueous electrolyte secondary battery according to one aspect of the present disclosure comprises: a lithium silicate phase of Li_{2z}SiO_{(2+z)} (wherein 0 < z < 2); silicon particles dispersed in the lithium silicate phase; and metallic particles dispersed in the lithium silicate phase and comprising a metal, an alloy, or a metal compound as a main component, wherein the metallic particles have an aspect ratio of 2.7 or more. It is considered that the metallic particles having an aspect ratio of 2.7 or more function as a filler reinforcing the silicate phase in the negative electrode active material for a non-aqueous electrolyte secondary battery according to one aspect of the present disclosure. It is also considered that since the silicon particles are dispersed in the silicate phase reinforced with the metallic particles, the volume change of the silicon particles due to the rapid charge/discharge is reduced to thereby prevent the breakage of the silicon particles and therefore the breakage of the particles of the negative electrode active material, and that a deterioration in the battery capacity is thus prevented.

Hereinafter, exemplary embodiments will be described in detail. The drawing referred for the description of embodiments is schematically illustrated, and the dimensions, the proportion, and the like of the components illustrated in the drawing may be different from those of actual products. Specific dimensions, the proportion, and the like should be determined in consideration of the description below.

A non-aqueous electrolyte secondary battery as an exemplary embodiment comprises: a negative electrode including the negative electrode active material described above, a positive electrode, and a non-aqueous electrolyte. A separator is preferably disposed between the positive electrode and the negative electrode. In an exemplary structure of the non-aqueous electrolyte secondary battery, an exterior body houses an electrode assembly formed by winding the positive electrode and the negative electrode together with the separator therebetween; and the non-aqueous electrolyte. Instead of the electrode assembly having the wound structure, an electrode assembly of another type may be applied, including an electrode assembly having a laminated structure formed by alternately laminating positive electrodes and negative electrodes with separators therebetween. The non-aqueous electrolyte secondary battery may be any form including a cylindrical shape, a rectangular shape, a coin shape, a button shape, and a laminated shape.

### [Positive Electrode]

The positive electrode preferably includes a positive electrode current collector, such as a metal foil, and a positive electrode mixture layer formed on the current collector. Foil of a metal that is stable in the electric potential range of the positive electrode, such as aluminum, a film with such a metal disposed as an outer layer, and the like can be used for the positive electrode current collector. The positive electrode mixture layer preferably includes a positive electrode active material as well as a conductive agent and a binder. The surface of the particle of the positive electrode active material may be coated with micro particles of an oxide such as aluminum oxide (Al₂O₃) or an inorganic compound such as a phosphoric acid compound or a boric acid compound.

Examples of the positive electrode active material include a lithium transition metal oxide, which contains a transition metal element such as Co, Mn, or Ni. Examples of the lithium transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be used singly or two or more thereof may be mixed and used.

Examples of the conductive agent include carbon materials such as carbon black, acetylene black, Ketjen black, and graphite. These may be used singly or in combinations of two or more thereof.

Examples of the binder include fluoro resins, such as polytetrafluoroethylene (PTFE) and poly(vinylidene fluoride) (PVdF), polyacrylonitrile (PAN), polyimide resins, acrylic resins, and polyolefin resins. These resins may be combined with carboxymethyl cellulose (CMC) or a salt thereof (e.g., CMC-Na, CMC-K, or CMC-NH₄ which may be a partially neutralized salt), poly(ethylene oxide) (PEO), or the like. These may be used singly or in combinations of two or more thereof.

### [Negative Electrode]

The negative electrode preferably includes a negative electrode current collector, such as a metal foil, and a negative electrode mixture layer formed on the current collector. Foil of a metal that is stable in the electric potential range of the negative electrode, such as copper, a film with such a metal disposed as an outer layer, and the like can be used for the negative electrode current collector. The negative electrode mixture layer preferably includes a negative electrode active material as well as a binder. As the binder, fluoro resins, PAN, polyimide resins, acrylic resins, polyolefin resins, and the like can be used, as in the positive electrode. When a mixture slurry is prepared using an aqueous solvent, CMC or a salt thereof (e.g., CMC-Na, CMC-K, or CMC-NH₄ which may be a partially neutralized salt), styrene-butadiene rubber (SBR), poly(acrylic acid) (PAA) or a salt thereof (e.g., PAA-Na or PAA-K which may be a partially neutralized salt), poly(vinyl alcohol) (PVA), or the like is preferably used.

FIG. 1 shows a sectional view of a particle of the negative electrode active material as an exemplary embodiment. A particle 10 of the negative electrode active material shown in FIG. 1 comprises a base particle 13 comprising a lithium silicate phase 11, silicon particles 12 dispersed in the lithium silicate phase 11, and metallic particles 15 dispersed in the lithium silicate phase 11. The particle 10 of the negative electrode active material shown in FIG. 1 preferably has a conductive layer 14 formed on the surface of the base particle 13.

The base particle 13 may include a third component other than the lithium silicate phase 11, the silicon particles 12, or the metallic particles 15. Examples of the third component include SiO₂ as a natural oxide film formed on the surface of the silicon particle 12. For the particles 10 (base particle 13) of the negative electrode active material with SiO₂ as a natural oxide film, it is preferable that no peak assigned to SiO₂ be exhibited at 2θ = 25° in an XRD pattern obtained by XRD measurement. The content of SiO₂ as a natural oxide film formed on the surface of the silicon particle 12 is preferably less than 10 mass% and more preferably less than 7 mass%, based on the total amount of the particles 10 of the negative electrode active material.

The silicon particles 12 can intercalate more lithium ions than carbon materials such as graphite, and thus contributes to a larger capacity of a battery when the particles 10 of the negative electrode active material are applied as a negative electrode active material.

The content of the silicon particles 12 is preferably 20 mass% to 95 mass% and more preferably 35 mass% to 75 mass% based on the total mass of the base particle 13 in view of, for example, a larger capacity and the improvement in the cyclic characteristics. If the content of the silicon particles 12 is too low, the charge/discharge capacity decrease, for example, and also diffusion of lithium ions may be poor to deteriorate loading characteristics. If the content of the silicon particles 12 is too high, the preventing effect on the deterioration in the charge/discharge cyclic characteristics may be reduced, for example.

The average particle size of the silicon particles 12 is, for example, 500 nm or less, preferably 200 nm or less, and more preferably 50 nm or less, before the first charge. The average particle diameter of the silicon particles 12 is preferably 400 nm or less, and more preferably 100 nm or less, after the first charge. Fine silicon particles 12 exhibit the reduced volume change thereof upon charge/discharge and are thus likely to prevent cracking of the particles of the active material. The average particle diameter of the silicon particles 12 is determined through observation of the cross section of the particles 10 of the negative electrode active material using a scanning electron microscope (SEM) or a transmission electron microscope (TEM), and specifically, is obtained by converting each area of one hundred silicon particles 12 into the circle equivalent diameter thereof and averaging them.

The lithium silicate phase 11 is formed of a lithium silicate represented by Li_{2z}SiO_{(2+z)} (wherein 0 < z < 2). In other words, the lithium silicate forming the lithium silicate phase 11 does not include Li₄SiO₄ (z = 2). Li₄SiO₄ is an unstable compound and reacts with water to indicate alkalinity, which degenerates Si to cause a deterioration in the charge/discharge capacity. The lithium silicate phase 11 preferably includes Li₂SiO₃ (Z = 1) or Li₂Si₂O₅ (Z = 1/2) as a main component, and more preferably includes Li₂Si₂O₅ (Z = 1/2) as a main component in view of stability, ease of production, and lithium ionic conductivity. When the main component (a component in the most amount in terms of mass) is Li₂SiO₃ or Li₂Si₂O₅, the content of the main component is preferably 50 mass% or more and more preferably 80 mass% or more, based on the total mass of the lithium silicate phase 11.

The lithium silicate phase 11 is preferably an aggregate of fine particles. For example, the lithium silicate phase 11 is preferably formed of finer particles than the silicon particles 12. For example, the intensity of the peak of Si (111) is larger than the intensity of the peak of the lithium silicate (111) in an XRD pattern of the particles 10 of the negative electrode active material.

The metallic particles 15 are particles comprising a metal, an alloy, or a metal compound as a main component (a component in the most amount in terms of mass among a metal, an alloy, and a metal compound forming the metallic particles 15), the particles having an aspect ratio of 2.7 or more. As described hereinbefore, when the metallic particles 15 having an aspect ratio of 2.7 or more are dispersed in the lithium silicate phase 11, the volume change of the silicon particles 12 due to the rapid charge/discharge is reduced to thereby prevent the breakage of the particles, and a deterioration in the battery capacity is thus prevented.

The aspect ratio of the metallic particles 15 is 2.7 or more, and preferably 3.0 or more in view of preventing a deterioration in the battery capacity upon the rapid charge/di scharge.

The aspect ratio of the metallic particles 15 is a value determined through observation of the cross section of the particles 10 of the negative electrode active material using a scanning electron microscope (SEM) or a transmission electron microscope (TEM). Specifically, the aspect ratio is an average of values of the aspect ratio of randomly selected ten metallic particles 15 that is obtained by measuring the maximum diameter and the minimum diameter in the respective images of the particles 10 of the negative electrode active material imaged with a SEM or TEM and dividing the maximum diameter by the minimum diameter.

Examples of the metallic particle 15 include particles that include a metal or an alloy including at least any one of Al, Fe, Cu, Sn, Sb, B, Pb, Cr, Zr, Mn, Ni, Nb, and Mo as a main component. Among these, particles that include a metal or an alloy including at least any one of Al, Fe, Cu, Sn, Sb, Cr, and Pb as a main component are preferable, and particles that include a metal or an alloy including Al as a main component are more preferable. Particles that include a metal or an alloy including at least any one of Al, Fe, Cu, Sn, Sb, and Pb as a main component have excellent malleability and are thus capable of having a higher aspect ratio, and hence it can be considered that they are likely to function as fillers for reinforcing the lithium silicate phase 11.

The metal or alloy forming the metallic particles 15 may be alloyed with at least one of Si (the silicon particles 12) and lithium silicate (the lithium silicate phase 11). The metallic particles 15 can be alloyed with at least one of Si and lithium silicate by heat treatment in production process of the particles 10 of the negative electrode active material. Such alloying strengthens the adhesion of the metallic particles 15 to the lithium silicate phase 11, for example, to thereby easily prevent the breakage of the particles due to the rapid charge/discharge. Whether the metal or alloy forming the metallic particles 15 is alloyed with at least one of Si and lithium silicate can be confirmed with energy dispersive X-ray spectrometry (EDS).

Examples of the metallic particle 15 including a metal compound as a main component include particles that include as a main component a metal compound including at least any one of a metal oxide, metal carbide, metal nitride, and metal boride. Among these, particles that include as a main component a metal compound including at least any one of a metal oxide and metal carbide are preferable, and particles that include as a main component a metal compound including at least any one of zirconium oxide, aluminum oxide, zirconium carbide, tungsten carbide, and silicon carbide are more preferable. Particles that include as a main component a metal compound including at least any one of zirconium oxide, aluminum oxide, zirconium carbide, tungsten carbide, and silicon carbide are likely to maintain a given aspect ratio, and it can be thus considered that they are likely to function as fillers for reinforcing the lithium silicate phase 11.

Both metal or alloy particles and metal compound particles may be included together as the metallic particle 15. The metal or alloy particles have different malleability from that of the metal compound particles, and it is thus considered that expansion and contraction of the base particles 13 due to the charge/discharge of the battery are likely to be prevented. In the configuration where both the metal or alloy particles and the metal compound particles are included together, the aspect ratio of the metal compound particles may be out of the range when that of the metal or alloy particles is within the range.

The content of the metallic particle 15 in the base particle 13 is preferably 1 mass% to 10 mass% and more preferably 2 mass% to 8 mass% based on the total mass of the base particle 13. When the content of the metallic particle 15 is within the range described above, the breakage of the particles due to the rapid charge/discharge is prevent to thereby prevent a deterioration in the battery capacity, compared to the case where the content is out of the range described above.

The average particle diameter of the metallic particles 15 is preferably 800 nm or less and more preferably 600 nm or less. When the particle diameter of the metallic particles 15 is within the range described above, a uniform dispersed state of the metallic particles 15 in the lithium silicate phase 11 is likely to be formed. The average particle diameter of the metallic particles 15 is determined thorough observation of the cross section of the particles 10 of the negative electrode active material using a SEM or TEM as for the case of the silicon particles 12, and specifically, the average particle diameter is obtained by converting each area of one hundred metallic particles 15 into the circle equivalent diameter thereof and averaging them.

The average particle size of the particles 10 of the negative electrode active material is preferably 1 to 15 µm, and more preferably 4 to 10 µm in view of, for example, higher capacity and the improvement in the cyclic characteristics. The average particle size of the particles 10 of the negative electrode active material herein is the particle size of the primary particle and means a diameter (a volume average particle size) at an integrated volume of 50% in the particle size distribution analyzed according to the laser diffraction/scattering method (using, for example, "LA-750" manufactured by HORIBA, Ltd.). If the average particle size of the particles 10 of the negative electrode active material is too small, the surface area thereof is larger, and therefore the amount thereof reacting with an electrode is likely to be larger to result in decrease in the capacity. On the other hand, if the average particle size of the particles 10 of the negative electrode active material is too large, the change in the volume due to charge/discharge may be larger to sometimes result in reduction in the preventing effect on the decrease in the charge/discharge cyclic characteristics. It is preferable to form a conductive layer 14 on the surface of the particles 10 (base particle 13) of the negative electrode active material; however, the thickness of the conductive layer 14 is so small that it has no influence on the average particle size of the particles 10 of the negative electrode active material (the particle size of the particle 10 of the negative electrode active material ≈ the particle size of the base particle 13).

As the negative electrode active material for a non-aqueous electrolyte secondary battery, the particles 10 of the negative electrode active material may be used alone or may be used in combination with another active material. A carbon material such as graphite is preferable as the other active material. When the carbon material is used in combination therewith, the mass ratio of the particles 10 of the negative electrode active material to the carbon material is preferably 1:99 to 30:70 in view of, for example, a large capacity and improvement in charge/discharge cyclic characteristics.

The base particles 13 are produced through, for example, the following steps 1 to 3. (1) A Si powder, a lithium silicate powder of Li_{2z}SiO_{(2+z)} (wherein 0 < z <2), and a metallic powder including a metal, an alloy, or a metal compound as a main component are mixed in a predetermined mass ratio to produce a mixture, each of these powders having been ground to an average particle diameter of proximately several micrometers to several tens of micrometers. (2) Then, the mixture is ground for atomization with a ball mill. Alternatively, the material powders can be each atomized and then mixed to produce a mixture. (3) The ground mixture is heat-treated, for example, at 600 to 1000°C in an inert atmosphere. In this heat treatment, pressure may be applied to the mixture, as in hot press, to produce a sintered compact of the mixture. The lithium silicate represented by Li_{2z}SiO_{(2+z)} (wherein 0 < z < 2) is stable in the temperature range described above, and it is considered that the lithium silicate is unlikely to react with Si.

The control of the aspect ratio of the metallic particles is performed by controlling the time duration of grinding with a ball mill in step (2) described above, for example. The time duration of grinding with a ball mill in step (2) described above is preferably within the range of, for example, 1 to 45 hours, depending on the types of the metallic powder and the silicate powder used. If the time duration is longer than 45 hours, it is difficult that the metallic particles to be finally obtained has an aspect ratio of 2.7 or more. If the time duration is shorter than 1 hour, it is difficult to disperse the metallic particles and the silicon particles in the lithium silicate phase throughout.

The lithium silicate powder of Li_{2z}SiO_{(2+z)} (wherein 0 < z < 2) preferably includes Li₂SiO₃ (Z = 1) or Li₂Si₂O₅ (Z = 1/2) as a main component in view of, for example, stability of the lithium silicate phase 11 to be finally obtained, ease of production, and lithium ionic conductivity. The lithium silicate powder more preferably includes Li₂Si₂O₅ (Z = 1/2) as a main component because Li₂Si₂O₅ (Z = 1/2) has higher hardness than Li₂SiO₃ (Z = 1) and is capable of forming metallic particles having a higher aspect ratio.

The conductive material for forming the conductive layer 14 is preferably electrochemically stable, and is preferably at least one selected from the group consisting of a carbon material, a metal, and a metal compound. As the carbon material, carbon black, acetylene black, ketjen black, graphite, and a mixture of two or more thereof can be used, as in the conductive material for the positive electrode mixture layer. As the metal, copper, nickel, and an alloy thereof that is stable in the electric potential range of the negative electrode can be used. Examples of the metal compounds include a copper compound and a nickel compound (a metal or metal compound layer can be formed on the surface of the base particle 13 by, for example, nonelectrolytic plating). Among these, the carbon material is particularly preferably used.

Examples of the method for coating the surface of the base particle 13 with the carbon material include a CVD method involving using acetylene, methane, or the like, and a method in which the base particles 13 are mixed and heat-treated with coal pitch, petroleum pitch, a phenol resin, or the like. Alternatively, carbon black, ketjen black, or the like may be adhered to the surface of the base particles 13 with a binder.

Preferably, the almost whole area of the surface of the base particle 13 is covered with the conductive layer 14. The thickness of the conductive layer 14 is preferably 1 to 200 nm and more preferably 5 to 100 nm in view of ensuring the conductivity and the diffusibility of lithium ions into the base particles 13. If the thickness of the conductive layer 14 is too small, the conductivity decreases, and it is also difficult to uniformly cover the base particles 13. On the other hand, if the thickness of the conductive layer 14 is too large, there is a tendency that the diffusion of the lithium ions into the base particles 13 is inhibited to decrease the capacity. The thickness of the conductive layer 14 can be measured through the observation of the cross section of the particle using SEM, TEM, or the like.

### [Non-Aqueous Electrolyte]

The non-aqueous electrolyte includes a non-aqueous solvent and an electrolyte salt dissolved in the non-aqueous solvent. The non-aqueous electrolyte is not limited to a liquid electrolyte (non-aqueous electrolyte solution), and may be a solid electrolyte using a gel polymer or the like. As the non-aqueous solvent, esters, ethers, nitriles such as acetonitrile, amides such as dimethylformamide, and mixed solvents of two or more thereof can be used. The non-aqueous solvent may contain a halogen-substituted product formed by replacing at least one hydrogen atom of any of the above solvents with a halogen atom such as fluorine.

Examples of the esters include cyclic carbonate esters, such as ethylene carbonate (EC), propylene carbonate (PC), and butylene carbonate; chain carbonate esters, such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and chain ethers such as, 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the halogen-substituted product preferable for use include a fluorinated cyclic carbonate ester such as fluoroethylene carbonate (FEC), a fluorinated chain carbonate ester, a fluorinated chain carboxylate ester such as methyl fluoropropionate (FMP).

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lithium short-chain aliphatic carboxylates; borate salts such as Li₂B₄O₇ and Li(B(C₂O₄)F₂); and imide salts such as LiN(SO₂CF₃)₂ and LiN(C₁F₂ₗ₊₁SO₂)(CₘF₂ₘ₊₁SO₂) (where 1 and m are integers of 0 or more). These lithium salts may be used singly or two or more thereof may be mixed and used. Among these, LiPF₆ is preferably used in view of ionic conductivity, electrochemical stability, and other properties. The concentration of the lithium salt is preferably 0.8 to 1.8 mole per 1L of the non-aqueous solvent.

### [Separator]

As the separator, an ion-permeable and insulating porous sheet is used, for example. Specific examples of the porous sheet include a microporous thin film, woven fabric, and nonwoven fabric. Suitable examples of the material for the separator include olefin resins such as polyethylene and polypropylene, and cellulose. The separator may be a laminate including a cellulose fiber layer and a layer of fibers of a thermoplastic resin such as an olefin resin.

### EXAMPLES

Hereinafter, the present disclosure will be described in more detail by way of Examples, but the present disclosure is not limited thereby.

### <Example 1>

### [Production of Negative Electrode Active Material]

In an inert atmosphere, a Si powder (3N, 10 µm ground product) and a Li₂Si₂O₅ powder (10 µm ground product) were weighed at a mass ratio of 42:58, followed by adding an Al powder (10 µm ground product) thereto in an amount of 1 mass%, and the resulting mixture was placed in a pot (made of SUS, volume: 500 mL) of a planetary ball mill (P-5, manufactured by FRITSCH). Twenty four SUS-made balls (diameter: 20 mm) were placed in the pot, and a lid was put thereon, followed by grinding treatment at 200 rpm for 40 hours. Then, the resulting powder was taken out in an inert atmosphere, and heat-treated in conditions of 800°C for 4 hours in an inert atmosphere. The heat-treated powder (hereinafter, referred to as base particles) was ground and passed through a 40-µm mesh, and the resulting powder was then mixed with coal pitch (MCP 250, manufactured by JFE Chemical Corporation). The mixture was heat-treated at 800°C in an inert atmosphere to coat the surface of each base particle with carbon, thereby forming a conductive layer. The amount of the carbon coating was about 5 mass% based on the total mass of the particle composed of the base particle and the conductive layer. The resultant was then conditioned using a sieve so as to have an average particle diameter of 5 µm, thereby obtaining a negative electrode active material.

### [Analysis of Negative Electrode Active Material]

As the result of the observation with SEM on the cross sections of the negative electrode active material, the Si particles were found to have an average particle diameter less than 250 nm, and the Al particles were found to have an average particle diameter less than 200 nm and an aspect ratio of 3.0. As the result of the observation with SEM on the cross sections of the particles of the negative electrode active material, it was found that the Si particles and the Al particles were almost uniformly dispersed in the matrix formed of Li₂Si₂O₅. Peaks assigned to Si and Li₂Si₂O₅ were found in the XRD pattern of the negative electrode active material. Here, the content of the Al particles can be determined by ICP emission spectral analysis. No peak of SiO₂ was found at 2θ = 25°. As the result of the Si-NMR analysis of the negative electrode active material, the SiO₂ content was found to be less than 7 mass% (equal to or lower than the minimum limit of detection).

### [Preparation of Negative Electrode]

Next, the above-described negative electrode active material and polyacrylonitrile (PAN) were mixed in a mass ratio of 95:5, and N-methyl-2-pyrrolidone (NMP) was added thereto. The resulting mixture was then stirred using a mixer (THINKY MIXER Awatori-Rentaroh, manufactured by THINKY CORPORATION) to prepare a negative electrode mixture slurry. Then, the slurry was applied to one side of a copper foil so that the mass of the negative electrode mixture layer was 25 g per m². The coating was dried at 105°C in atmospheric air, and then rolled to produce a negative electrode. The packing density of the negative electrode mixture layer was 1.50 g/cm³.

### [Preparation of Non-aqueous Electrolyte Solution]

Ethylene carbonate (EC) and diethyl carbonate (DEC) were mixed in a volume ratio of 3:7. LiPF₆ was added to the mixed solvent to a concentration of 1.0 mol/L to thereby prepare a non-aqueous electrolyte solution.

### [Production of Non-Aqueous Electrolyte Secondary Battery]

In an inert atmosphere, the negative electrode described above and a lithium metal foil each having a Ni tab attached thereto were disposed opposite to each other with a polyethylene separator interposed therebetween to thereby form an electrode assembly. The electrode assembly was then housed in a battery exterior body made of an aluminum-laminated film, and the non-aqueous electrolyte solution was injected to the battery exterior body. The battery exterior body was sealed to thereby prepare a battery.

### <Example 2>

A negative electrode active material was prepared in the same manner as in Example 1, except that the grinding treatment with a ball mill was carried out at 200 rpm for 30 hours. As the result of the observation with SEM on the cross sections of the negative electrode active material, the Si particles were found to have an average particle diameter of less than 300 nm, and the Al particles were found to have an average particle diameter of less than 245 nm and an aspect ratio of 4.5. A battery was prepared using the negative electrode active material in the same manner as in Example 1.

### <Example 3>

A negative electrode active material was prepared in the same manner as in Example 1, except that the grinding treatment with a ball mill was carried out at 200 rpm for 10 hours. As the result of the observation with SEM on the cross sections of the negative electrode active material, the Si particles were found to have an average particle diameter of less than 350 nm, and the Al particles were found to have an average particle diameter of less than 280 nm and an aspect ratio of 10.5. A battery was prepared using the negative electrode active material in the same manner as in Example 1.

### <Example 4>

A negative electrode active material was prepared in the same method as in Example 1, except that the percentage (mass ratio) of the Al powder mixed was changed to 5 mass%. As the result of the observation with SEM on the cross sections of the negative electrode active material, the Si particles were found to have an average particle diameter of less than 270 nm, and the Al particles were found to have an average particle diameter of less than 240 nm and an aspect ratio of 3.5. A battery was prepared using the negative electrode active material in the same manner as in Example 1.

### <Example 5>

A negative electrode active material was prepared in the same method as in Example 1, except that the percentage (mass ratio) of the Al powder mixed was changed to 10 mass%. As the result of the observation with SEM on the cross sections of the negative electrode active material, the Si particles were found to have an average particle diameter of less than 260 nm, and the Al particles were found to have an average particle diameter of less than 250 nm and an aspect ratio of 4.6. A battery was prepared using the negative electrode active material in the same manner as in Example 1.

### <Example 6>

A negative electrode active material was prepared in the same manner as in Example 1, except that a Fe powder was used instead of the Al powder. As the result of the observation with SEM on the cross sections of the negative electrode active material, the Si particles were found to have an average particle diameter of less than 250 nm, and the Fe particles were found to have an average particle diameter of less than 270 nm and an aspect ratio of 2.8. A battery was prepared using the negative electrode active material in the same manner as in Example 1.

### <Example 7>

A negative electrode active material was prepared in the same manner as in Example 1, except that a Li₂SiO₃ powder was used instead of the Li₂Si₂O₅ powder. As the result of the observation with SEM on the cross sections of the negative electrode active material, the Si particles were found to have an average particle diameter of less than 255 nm, and the Fe particles were found to have an average particle diameter of less than 240 nm and an aspect ratio of 2.7. A battery was prepared using the negative electrode active material in the same manner as in Example 1.

### <Example 8>

A negative electrode active material was prepared in the same manner as in Example 1, except that a Cu powder was used instead of the Al powder. As the result of the observation with SEM on the cross sections of the negative electrode active material, the aspect ratio was 2.8. A battery was prepared using the negative electrode active material in the same manner as in Example 1.

### <Example 9>

A negative electrode active material was prepared in the same manner as in Example 1, except that a Sn powder was used instead of the Al powder. As the result of the observation with SEM on the cross sections of the negative electrode active material, the aspect ratio was 2.8. A battery was prepared using the negative electrode active material in the same manner as in Example 1.

### <Example 10>

A negative electrode active material was prepared in the same manner as in Example 1, except that a Sb powder was used instead of the Al powder. As the result of the observation with SEM on the cross sections of the negative electrode active material, the aspect ratio was 2.8. A battery was prepared using the negative electrode active material in the same manner as in Example 1.

### <Example 11>

A negative electrode active material was prepared in the same manner as in Example 1, except that a Pb powder was used instead of the Al powder. As the result of the observation with SEM on the cross sections of the negative electrode active material, the aspect ratio was 2.8. A battery was prepared using the negative electrode active material in the same manner as in Example 1.

### <Example 12>

A negative electrode active material was prepared in the same manner as in Example 1, except that a Cr powder was used instead of the Al powder. As the result of the observation with SEM on the cross sections of the negative electrode active material, the aspect ratio was 2.8. A battery was prepared using the negative electrode active material in the same manner as in Example 1.

### <Example 13>

A negative electrode active material was prepared in the same manner as in Example 1, except that a Zr powder was used instead of the Al powder. As the result of the observation with SEM on the cross sections of the negative electrode active material, the aspect ratio was 2.8. A battery was prepared using the negative electrode active material in the same manner as in Example 1.

### <Example 14>

A negative electrode active material was prepared in the same manner as in Example 1, except that a Mn powder was used instead of the Al powder. As the result of the observation with SEM on the cross sections of the negative electrode active material, the aspect ratio was 2.8. A battery was prepared using the negative electrode active material in the same manner as in Example 1.

### <Example 15>

A negative electrode active material was prepared in the same manner as in Example 1, except that a Ni powder was used instead of the Al powder. As the result of the observation with SEM on the cross sections of the negative electrode active material, the aspect ratio was 2.8. A battery was prepared using the negative electrode active material in the same manner as in Example 1.

### <Example 16>

A negative electrode active material was prepared in the same manner as in Example 1, except that a Nb powder was used instead of the Al powder. As the result of the observation with SEM on the cross sections of the negative electrode active material, the aspect ratio was 2.8. A battery was prepared using the negative electrode active material in the same manner as in Example 1.

### <Example 17>

A negative electrode active material was prepared in the same manner as in Example 1, except that a Mo powder was used instead of the Al powder. As the result of the observation with SEM on the cross sections of the negative electrode active material, the aspect ratio was 2.8. A battery was prepared using the negative electrode active material in the same manner as in Example 1.

### <Example 18>

A negative electrode active material was prepared in the same manner as in Example 1, except that a B powder was used instead of the Al powder. As the result of the observation with SEM on the cross sections of the negative electrode active material, the aspect ratio was 2.7. A battery was prepared using the negative electrode active material in the same manner as in Example 1.

### <Comparative Example 1>

A negative electrode active material was prepared in the same manner as in Example 1, except that the Si powder and the Li₂Si₂O₅ powder were mixed at a mass ratio of 42:58 without adding any aluminum powder and that the grinding treatment with a ball mill was carried out at 200 rpm for 50 hours. A battery was prepared using the negative electrode active material in the same manner as in Example 1.

### <Comparative Example 2>

A negative electrode active material was prepared in the same manner as in Example 1, except that a Li₂SiO₃ powder and a Fe powder were used instead of the Li₂Si₂O₅ powder and the Al powder, respectively, and that the grinding treatment with a ball mill was carried out at 200 rpm for 50 hours. As the result of the observation with TEM on the cross sections of the negative electrode active material, the Si particles were found to have an average particle diameter of less than 250 nm, and the Fe particles were found to have an average particle diameter of less than 200 nm and an aspect ratio of 2.3. A battery was prepared using the negative electrode active material in the same manner as in Example 1.

On each of the batteries according to Examples and Comparative Examples, rapid charge/discharge was carried out and the battery capacity (discharge capacity) was evaluated, in the following method. The results were shown in Table 1. The battery capacity in Table 1 is a discharge capacity in each of Examples and Comparative Examples that is a relative value to the discharge capacity in Comparative Example 1 as the reference (100).

### [Rapid Charge/Discharge]

Charging was carried out at a current of 1.0 It to a voltage of 0 V, and then discharging was carried out at a current of 1.0 It to a voltage of 1.0 V. The discharge capacity at this time was taken as the battery capacity.

### [Evaluation of Appearance of Particles of Negative Electrode Active Material after Rapid Charge/Discharge (Observation of Breakage of Particles)]

The battery after the rapid charge/discharge described above was broken up in an inert atmosphere. The negative electrode was taken out of the broken battery. In an inert atmosphere, a cross section of the negative electrode active material was allowed to expose using a cross section polisher (manufactured by JEOL Ltd.), and the cross section was observed with a SEM to confirm whether or not any of particles were broken. The breakage of a particle is defined as a state where a particle that is originally single has been divided into two or more smaller particles in the cross section of the particle. The results are shown in Table 1.

**[Table 1]**

| Example | Li Silicate | Metallic Particle (Content) | Time Duration of Grinding (h) | Aspect Ratio | Battery Capacity | Breakage of Particle |
|---|---|---|---|---|---|---|
| 1 | Li₂Si₂O₅ | Al (1wt%) | 40 | 3.0 | 110 | No |
| 2 | Li₂Si₂O₅ | Al (1wt%) | 30 | 4.5 | 115 | No |
| 3 | Li₂Si₂O₅ | Al (1wt%) | 10 | 10.5 | 120 | No |
| 4 | Li₂Si₂O₅ | Al (5wt%) | 40 | 3.5 | 130 | No |
| 5 | Li₂Si₂O₅ | Al (10wt%) | 40 | 4.6 | 145 | No |
| 6 | Li₂Si₂O₅ | Fe (1wt%) | 40 | 2.8 | 105 | No |
| 7 | Li₂SiO₃ | Al (1wt%) | 40 | 2.7 | 103 | No |
| 8 | Li₂Si₂O₅ | Cu (1wt%) | 40 | 2.8 | 105 | No |
| 9 | Li₂Si₂O₅ | Sn (1wt%) | 40 | 2.8 | 106 | No |
| 10 | Li₂Si₂O₅ | Sb (1wt%) | 40 | 2.8 | 104 | No |
| 11 | Li₂Si₂O₅ | Pb (1wt%) | 40 | 2.8 | 103 | No |
| 12 | Li₂Si₂O₅ | Cr (1wt%) | 40 | 2.8 | 108 | No |
| 13 | Li₂Si₂O₅ | Zr (1wt%) | 40 | 2.8 | 105 | No |
| 14 | Li₂Si₂O₅ | Mn (1wt%) | 40 | 2.8 | 102 | No |
| 15 | Li₂Si₂O₅ | Ni (1wt%) | 40 | 2.8 | 102 | No |
| 16 | Li₂Si₂O₅ | Nb (1wt%) | 40 | 2.8 | 105 | No |
| 17 | Li₂Si₂O₅ | Mo (1wt%) | 40 | 2.8 | 105 | No |
| 18 | Li₂Si₂O₅ | B (1wt%) | 40 | 2.7 | 105 | No |

| Comparative Example | | | | | | |
|---|---|---|---|---|---|---|
| 1 | Li₂Si₂O₅ | - | 50 | - | 100 | Yes |
| 2 | Li₂SiO₃ | Fe (1wt%) | 50 | 2.3 | 100 | Yes |

As shown in Table 1, a deterioration in the battery capacity due to rapid charge/discharge was prevented in all of the batteries according to Examples, compared to the batteries according to Comparative Examples. Breakage of the particles was observed when rapid charge/discharge was carried out on each of the batteries according to Comparative Examples, and on contrast, any breakage of the particles was not observed even when rapid charge/discharge was carried out on each of the batteries according to Examples. Accordingly, it can be said that even when rapid charge/discharge was carried out on the batteries, breakage of the particles and therefore the deterioration in the battery capacity due to the rapid charge/discharge were prevented by using a negative electrode active material comprising: a lithium silicate phase of Li_{2z}SiO_{(2+z)} (wherein 0 < z < 2); silicon particles dispersed in the lithium silicate phase; and metallic particles dispersed in the lithium silicate phase and comprising a metal, an alloy, or a metal compound as a main component, wherein the metallic particles have an aspect ratio of 2.7 or more.

### REFERENCE SIGNS LIST

10 particle of negative electrode active material
11 lithium silicate phase
12 silicon particle
13 base particle
14 conductive layer
15 metallic particle

## Claims

1. A negative electrode active material for a non-aqueous electrolyte secondary battery, comprising:
a lithium silicate phase of Li_{2z}SiO_{(2+z)} (wherein 0 < z < 2);
silicon particles dispersed in the lithium silicate phase; and
metallic particles dispersed in the lithium silicate phase and comprising a metal, an alloy, or a metal compound as a main component, wherein
the metallic particles have an aspect ratio of 2.7 or more.

2. The negative electrode active material for a non-aqueous electrolyte secondary battery according to claim 1, wherein the lithium silicate phase comprises Li₂Si₂O₅ as a main component.

3. The negative electrode active material for a non-aqueous electrolyte secondary battery according to claim 1 or 2, wherein the metallic particles comprise a metal or an alloy including at least any one of Al, Fe, Cu, Sn, Sb, B, Pb, Cr, Zr, Mn, Ni, Nb, and Mo as a main component.

4. The negative electrode active material for a non-aqueous electrolyte secondary battery according to any one of claims 1 to 3, wherein the metallic particles comprise a metal or an alloy including Al as a main component.

5. The negative electrode active material for a non-aqueous electrolyte secondary battery according to any one of claims 1 to 4, wherein a content of the metallic particles is 1 mass% to 10 mass% based on the total mass of a base particle composed of the lithium silicate phase, the silicon particles, and the metallic particles.

6. A non-aqueous electrolyte secondary battery comprising: a negative electrode including the negative electrode active material for a non-aqueous electrolyte secondary battery according to any one of claims 1 to 5, a positive electrode, and a non-aqueous electrolyte.
